(19) Europäisches Patentamt / European Patent Office / Office européen des brevets

(11) **EP 4 431 555 A1**

(12) **EUROPEAN PATENT APPLICATION**
published in accordance with Art. 153(4) EPC

(43) Date of publication:
**18.09.2024 Bulletin 2024/38**

(21) Application number: **22915557.7**

(22) Date of filing: **11.11.2022**

(51) International Patent Classification (IPC):
*C08J 7/00* (2006.01)       *B23K 26/352* (2014.01)
*B29C 65/16* (2006.01)       *C08J 5/18* (2006.01)

(52) Cooperative Patent Classification (CPC):
**B23K 26/352; B29C 65/16; B29C 71/04;**
**C08J 5/18; C08J 7/00**

(86) International application number:
**PCT/JP2022/042093**

(87) International publication number:
**WO 2023/127325 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.12.2021 JP 2021215079**

(71) Applicant: **Toyo Seikan Group Holdings, Ltd.**
**Shinagawa-ku**
**Tokyo 141-8627 (JP)**

(72) Inventors:
• **AKAHANE Takahiro**
**Yokohama-shi Kanagawa 240-0062 (JP)**
• **YUASA Yoshiyuki**
**Yokohama-shi Kanagawa 240-0062 (JP)**

(74) Representative: **Canzler & Bergmeier**
**Patentanwälte**
**Partnerschaft mbB**
**Despag-Straße 6**
**85055 Ingolstadt (DE)**

(54) **STRETCHED FILM AND METHOD FOR MODIFICATION TREATMENT OF STRETCHED FILM**

(57)     The present invention suppresses any variation in seal strength to obtain a desired seal strength when controlling seal strength. The present invention comprises a stretched polyester film having a heat seal region in which the surface of the film is irradiated with laser light of an infrared wavelength, and is configured such that: a heat seal precursor portion, an intermediate portion, and an unmodified portion are formed in the stated order order in the heat seal region from the surface irradiated with the laser light toward the film thickness direction; the birefringence of the heat seal precursor portion is $5 \times 10^{-3}$ or less; the thickness of the intermediate portion is $2 \mu m$ or less; and the birefringence of the unmodified portion has a percentage change of 20% or less relative to the portion not irradiated with laser light.

FIG. 2

**Description**

Technical Field

The present invention relates to a stretched film and a method for modification treatment of the stretched film.

Background Art

A stretched polyester film exhibits excellent strength, heat resistance, dimensional stability, chemical resistance, and aroma retention, and is useful as a packaging film. However, a stretched polyester film has poor heat sealability, and this poor heat sealability has hindered the use of a stretched polyester film as an inner surface film of a packaging container.

In response to this problem, a modification treatment method for imparting heat sealability to a stretched polyester film has been proposed. Basically, the modification treatment method employs irradiation of the surface of a stretched film with a laser beam to form a heat seal region with reduced crystallinity. In addition, in order to provide the stretched polyester film with easy peelability, a technique of forming a linear pattern through laser beam irradiation and adjusting the interval between linear patterns to thereby control heat seal strength has been proposed (see Patent Document 1 below).

Citation List

Patent Document

Patent Document 1: JP 2018-58973 A

Summary of Invention

Technical Problem

In the above-mentioned known technique, in order to satisfy a requirement for easy peelability, the heat seal strength is controlled by adjusting the interval between linear patterns through laser beam irradiation. According to this technique, a portion not irradiated with a laser beam; i.e., an untreated portion is present between linear patterns; i.e., treated portions irradiated with a laser beam, and thus the treated portions and the untreated portion are mixedly present in the heat seal region.

According to such a known technique, when the heat seal regions of a pair of films are brought into face-to-face contact with each other, the linear patterns may be shifted from each other, resulting in a state in which the treated portion and the untreated portion are overlapping. In this state, there is a concern that due to the degree of shifting of the overlapping state, variations are likely to occur in the seal strength that is to be adjusted.

Thus, an object of the present invention is to solve such problems. That is, an object of the present invention is to form a heat seal region to which heat sealability is imparted in a stretched film, and to achieve a desired seal strength by suppressing variations in seal strength for controlling the seal strength in the heat seal region.

Solution to Problem

In order to solve such problems, the present invention has the following configuration.

A stretched film including a stretched polyester film having a heat seal region on a surface of the film, the heat seal region being irradiated with a laser beam having a wavelength in an infrared region, wherein the heat seal region has a heat seal precursor portion, an intermediate portion, and an unmodified portion formed in this order in a film thickness direction from a surface irradiated with the laser beam, the heat seal precursor portion has a degree of birefringence of $5 \times 10^{-3}$ or less, the intermediate portion has a thickness of 2 $\mu$m or less, and a change rate in a degree of birefringence of the unmodified portion is 20% or less relative to a degree of birefringence of a portion not irradiated with the laser beam.

Advantageous Effects of Invention

According to the present invention, when a heat seal region is formed by irradiating a stretched film made of polyester with a laser beam having a wavelength in an infrared region, heat seal strength can be controlled by adjusting the thickness of a heat seal precursor portion among the heat seal precursor portion, intermediate portion, and unmodified portion which are formed in a thickness direction of the film. In addition, variations in heat seal strength can be suppressed, and a desired seal strength can be achieved.

Brief Description of Drawings

FIG. 1 is a plan view of a stretched film according to an embodiment of the present invention.
FIG. 2 is a cross-sectional explanatory view (cross-sectional view taken along line A-A in FIG. 1) for illustrating the stretched film according to the embodiment of the present invention.
FIG. 3 is a cross-sectional explanatory view for illustrating a laminated film of Example.
FIG. 4 is a graph showing the results of Example and Comparative Example.

Description of Embodiments

Hereinafter, embodiments of the present invention will be described with reference to the drawings. In the following description, the same reference numerals in different drawings denote elements having the same function, and redundant descriptions with regard to each drawing are omitted as appropriate.

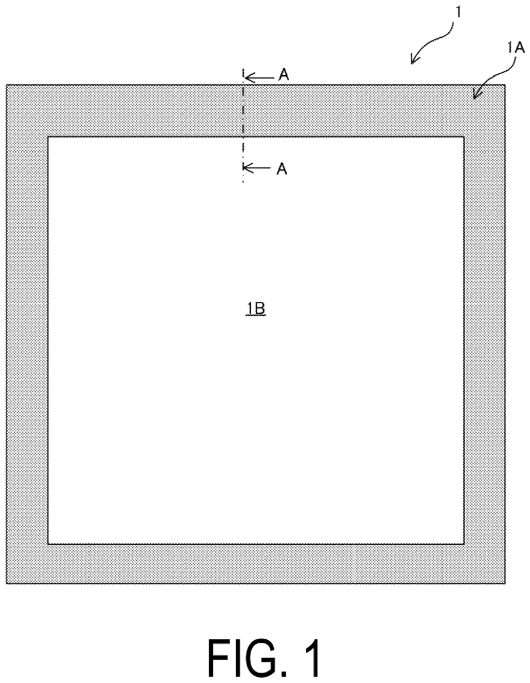

As illustrated in FIG. 1, a stretched film 1 includes a biaxially stretched film made of polyester, and has, on a surface of the film, a heat seal region 1A irradiated with a laser beam having a wavelength in an infrared region. In the biaxially stretched polyester film of the illustrated stretched film 1, a region other than the heat seal region 1A is a portion (untreated portion) 1B not irradiated with the laser beam.

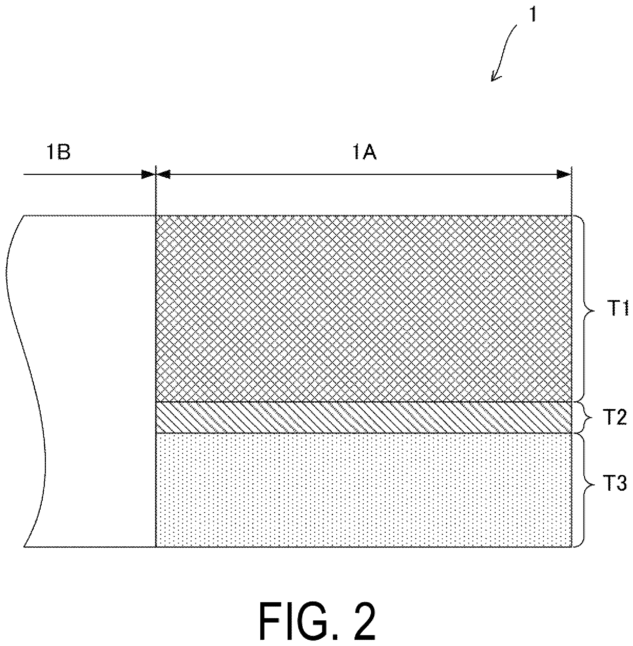

As illustrated in a cross-sectional view of FIG. 2, in the stretched film 1, the heat seal region 1A has a heat seal precursor portion T1, an intermediate portion T2, and an unmodified portion T3 in a film thickness direction from the surface side irradiated with the laser beam.

Here, the stretched film 1 is a uniaxially or biaxially stretched polyester film. Specific examples of a polyester resin constituting the polyester film include polyethylene terephthalate, polybutylene terephthalate, polyethylene naphthalate, polybutylene naphthalate, copolymerized polyester, and polycarbonate.

One example of the stretched polyester film is a biaxially stretched polyethylene terephthalate (PET) film. Biaxially stretched polyester films such as a biaxially stretched PET film are known, and methods for their production are also known. Specifically, the biaxially stretched polyester film can be produced, for example, by biaxially stretching an unstretched raw film made of a raw material containing a polyester under conditions where the draw ratios in the machine direction (MD) and transverse direction (TD) are from 2.0 to 6.0 times, and then thermally treating the stretched film at a temperature from 210 to 230°C. As the biaxial stretching method, simultaneous biaxial stretching or sequential biaxial stretching by a tubular process or a tenter process can be employed.

The stretched film 1 may be any of a single stretched polyester film, a laminate of a stretched polyester film layer and another resin layer, a laminate of a stretched polyester film layer and a metal (for example, aluminum foil) layer, and a laminate of a stretched polyester film layer, a metal (for example, aluminum foil) layer, and another resin layer. In the case of a laminate, the layer of the stretched polyester film serves as a laser irradiation layer and is laminated with another film so that the heat seal precursor portion T1 is exposed.

The heat seal region 1A is formed by irradiating the film surface with a laser beam having a wavelength in an infrared region to thereby amorphize the stretched film 1. The crystalline state of the film can be evaluated by the degree of birefringence, and the degree of birefringence of a highly crystalline film is large, whereas the degree of birefringence of an amorphous film is small.

For the control of the heat seal strength, desirably, the entire planar region of the heat seal region 1A is the treated portion, and as illustrated in FIG. 1, an untreated portion is absent in the heat seal region 1A in a plan view. However, an untreated portion may be present in the heat seal region 1A as long as the heat seal strength can be controlled. The proportion of the treated portion in the heat seal region 1A is preferably 60% or more, more preferably 70% or more, and particularly preferably 80% or more. For irradiation with a laser beam to form the heat seal region 1A, the heat seal region 1A may be formed by repeatedly scanning the irradiation surface using a laser beam having a predetermined spot diameter on the irradiation surface. In such a case, the proportion of the untreated portion in the heat seal region 1A in a plan view can be reduced by setting the scanning line interval (distance between spot centers) to be smaller than the spot diameter.

The heat seal precursor portion T1 is the outermost surface layer on the laser beam irradiation side in the heat seal region 1A, and the intermediate portion T2 and the unmodified portion T3 are present below the heat seal precursor portion T1. The degree of birefringence of the heat seal precursor portion T1 is set to $5 \times 10^{-3}$ or less in order to exhibit heat sealability.

The irradiation conditions for irradiation with the laser beam must be specified in order to form the intermediate portion T2 and the unmodified portion T3 below the heat seal precursor portion T1. When the irradiation is implemented with a laser beam having a relatively long wavelength in an infrared region, the overall thickness of the film may become $5 \times 10^{-3}$ or less in terms of the degree of birefringence. However, by irradiating the film with a laser beam having a relatively short wavelength in an infrared region, the thicknesses of the heat seal precursor portion T1 can be controlled in a thickness direction of the entire film, and the intermediate portion T2 and the unmodified portion T3 are formed below the heat seal precursor portion T1.

It is thought that the thickness of the heat seal precursor portion T1 varies depending on whether the radiated infrared laser beam is easily absorbed by the stretched film 1. In the case of radiation of a laser beam having a wavelength in an infrared region and easily absorbed by the stretched polyester film, due to this absorption, modification by the laser beam does not easily progress in a thickness direction of the stretched film 1, and the intermediate portion T2 and the unmodified portion T3 are formed below the heat seal precursor T1.

Specifically, when the surface of a stretched polyester film (biaxially stretched PET film) having an overall film thickness of 12 $\mu$m is irradiated with a carbon dioxide gas laser having a wavelength of 10.6 $\mu$m in an infrared region, a layer having a degree of birefringence of $5 \times 10^{-3}$ or less is formed over the entire layer having a thickness of 12 $\mu$m.

In contrast, when the stretched polyester film (biaxially stretched PET film) is irradiated with a laser beam having a wavelength of 10.2 $\mu$m or 9.3 $\mu$m and a light attenuation rate that is larger than that of a laser beam having a wavelength of 10.6 $\mu$m, in the heat seal precursor portion T1 having a degree of birefringence of $5 \times 10^{-3}$ or less, only a surface of the film having a thickness of 12 $\mu$m can be treated, and the intermediate portion T2 and the unmodified portion T3 are formed below the heat seal precursor portion T1.

The relationship between the wavelength of the laser beam in an infrared region and the light attenuation rate in the biaxially stretched PET film is as shown in Table 1 below.

Table 1

| Wavelength [$\mu$m] | Light Attenuation Rate (12 $\mu$m thickness) [%] | Attenuation Coefficient [$\mu$m$^{-1}$] |
|---|---|---|
| 10.6 | 19 | 0.0076 |
| 10.2 | 47 | 0.023 |
| 9.3 | 62 | 0.035 |

Here, the attenuation coefficient represents the ability of the irradiated body (biaxially stretched PET film) to absorb the laser beam regardless of the thickness of the irradiated body. When a laser beam having a light intensity $I_0$ is incident on a medium having a thickness d, and the light intensity after passing through the irradiated body is defined as I, the attenuation coefficient $\mu$ can be expressed as follows using Lambert's law.

$$\log(I_0/I) = \mu d$$

The transmittance T is calculated as $T = I/I_0$, and the absorbance E is $-\log T = \log(I_0/I)$, and therefore the attenuation coefficient $\mu$ is calculated as $\mu = E/d$.

When the laser beam irradiation conditions are set using the attenuation coefficient $\mu$, it is thought that a threshold value exists between the wavelength of 10.6 $\mu$m (attenuation coefficient of 0.0076 $\mu$m$^{-1}$) and the wavelength of 10.2 $\mu$m (attenuation coefficient of 0.023 $\mu$m$^{-1}$). Thus, for example, by irradiating with a laser beam having an attenuation coefficient of 0.02 $\mu$m$^{-1}$ or greater, the intermediate portion T2 and the unmodified portion T3 can be formed below the heat seal precursor portion T1. However, the laser beam irradiation conditions described here are merely one example, and the heat seal precursor portion T1 having the intermediate portion T2 and the unmodified portion T3 formed therebelow can be produced by irradiating the stretched polyester film with a laser beam having a wavelength in an infrared region and having a relatively high light attenuation rate.

In the intermediate portion T2, the degree of birefringence is an intermediate value between that of the heat seal precursor portion T1 and that of the unmodified portion T3, and the degree of birefringence of the intermediate portion T2 is greater than $5 \times 10^{-3}$ and smaller than the degree of birefringence of the unmodified portion, and for example, may be continuously changed (gradient structure). In contrast, when formation of the heat seal precursor portion T1 having a degree of birefringence of $5 \times 10^{-3}$ or less is stopped midway in the film thickness direction, the unmodified portion T3 is formed adjacent to the intermediate portion T2 along the irradiation direction of the laser beam. A change rate in the degree of birefringence of the unmodified portion T3 is 20% or less relative to the portion 1B not irradiated with the laser beam. In this case, the intermediate portion T2 is firmly joined to the heat seal precursor portion T1 and the unmodified portion T3.

For example, when the intermediate portion T2 is absent, peeling may occur at the interface between the heat seal precursor portion T1 and the unmodified portion T3, resulting in problems such as film residue. Meanwhile, when the thickness of the intermediate portion T2 is excessively large, controlling the heat seal strength becomes difficult. Therefore, for example, the thickness of the intermediate portion T2 is preferably from 0.1 $\mu$m to 2 $\mu$m regardless of the overall thickness of the film.

Example will be described below.

Example

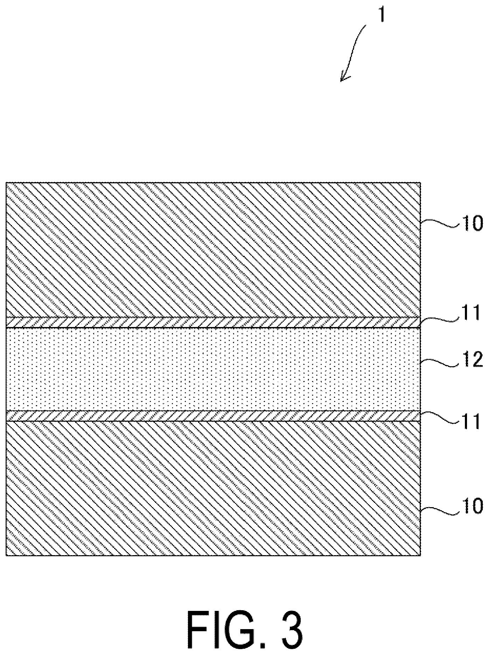

A laminated film illustrated in FIG. 3 was provided as a stretched film 1. This laminated film was prepared by laminating a biaxially stretched PET film 10 having a thickness of 12 $\mu$m on both surfaces of an aluminum foil 12 having a thickness of 7 $\mu$m using a polyurethane adhesive 11. A heat seal region (treated portion) 1A was formed in the biaxially stretched PET film 10 by treating the laminated film by the following modification treatment method. The thicknesses and degrees of birefringence of a heat seal precursor portion T1, an intermediate portion T2, and an unmodified portion T3 in the heat seal region 1A were measured and calculated by the following methods.

Modification Treatment Method

A carbon dioxide gas laser oscillator ($CO_2$ laser) that emits a laser beam having a wavelength in an infrared region of 9.3 $\mu$m (attenuation coefficient of 0.035 $\mu$m$^{-1}$) was used as a laser beam light source, and the surface of the biaxially stretched PET film 10 of the stretched film 1 was irradiated with a laser beam under conditions including an output of 100 W, a spot diameter on the irradiation surface of approximately 1 mm, a scanning speed from 11000 to 24000 mm/sec, and a scanning line interval (distance between spot centers) from 0.2 to 0.7 mm, to thereby form a heat seal region 1A having no untreated portion and having a width of 100 mm and a length of 10 mm.

Calculation of Degree of Birefringence ($\Delta$n) and Measurement of Thickness of Each Layer

For calculation of the degree of birefringence, a sample piece having a thickness of 5 $\mu$m was cut from the heat seal region 1A using a microtome, and a retardation value was measured using a polarizing microscope (Axioplan2 Imaging, available from Carl Zeiss AG) equipped with a tilting compensator.

The layer to be measured (for example, the heat seal precursor portion T1) was set on a rotation stage at a position where the layer appeared to be the brightest (diagonal position), the scale of the compensator was rotated to cancel the retardation of the layer to be measured and the retardation of the compensator, and the angle value at which the layer appeared to be darkest was read to obtain the retardation value corresponding to the angle value. This operation was performed on the heat seal precursor portion T1, the intermediate portion T2, and the unmodified portion T3 in the heat seal region 1A, and the retardation values of the respective portions were obtained. The degree of birefringence was then calculated on the basis of the obtained retardation value by using the following formula.

$$\text{Degree of birefringence } (\Delta n) = R/d \ (R: \text{retardation, } d: \text{sample piece thickness})$$

In addition, when the retardation value was measured, the range in which each layer (for example, the heat seal precursor portion T1) appeared dark was measured as the thicknesses of the layer, and the thicknesses of the heat seal precursor portion, the intermediate portion, and the unmodified portion were measured.

Measurement of Light Attenuation Rate %E

Absorbances A at 943 cm$^{-1}$ and 1075 cm$^{-1}$ corresponding to wavelengths of 9.3 $\mu$m and 10.6 $\mu$m were determined from the infrared spectrum of the biaxially stretched PET film having a thickness of 12 $\mu$m measured using a Fourier transform infrared spectrophotometer (FTIR) (FTS7000, available from Varian, Inc.), and the light transmittance %T was calculated from %T = 10$^{-A}$. The light attenuation rate %E was determined from %E = 100 - %T. The results are shown in Table 1.

Measurement of Heat Seal Strength

Two samples of the stretched film 1 provided with the heat seal region 1A were prepared, and the heat seal regions 1A were overlapped and heat sealed under conditions including a heat seal bar temperature of 180°C, a heating time of 1 second, and a heat seal pressure of 0.2 MPa to thereby form a sample. Five strips each having a width of 15 mm were cut out from the sample, and the seal strengths of the strips were measured at a tensile speed of 300 mm/min by the T-peel method using a Tensilon universal tester (UCT-5T, available from Orientec Corporation). The heat seal strength was calculated as the average of the values of the five strips.

Comparative Example

A stretched film having a heat seal region was prepared in the same manner as in the Example except that the following modification treatment method was employed.

Modification Treatment Method in Comparative Examples

A carbon dioxide gas laser oscillator ($CO_2$ laser) with a wavelength of 10.6 $\mu$m was used as a laser beam light source, and the surface of the stretched film was irradiated with a laser beam under conditions including an output of 30 W, a spot diameter on the irradiation surface of approximately 1 mm, a scanning speed from 1528 to 1910 mm/sec, and a scanning line interval (distance between spot centers) of 0.7 mm, to thereby form a heat seal region having a width of 100 mm and a length of 10 mm.

The measurement results of the Example are shown in Table 2, and the measurement results of the Comparative Example are shown in Table 3. In Table 2, the "Change rate [%] of unmodified portion" is a change rate in the degree of birefringence of the unmodified portion T3 relative to the degree of birefringence of the non-irradiated portion 1B, and is determined by the following formula: 100 × (degree of birefringence of non-irradiated portion - degree of birefringence of unmodified portion)/(degree of birefringence of non-irradiated portion).

Table 2

| | | | | | | | | | |
|---|---|---|---|---|---|---|---|---|---|
| Output [W] | | 100 | | | | | | | |
| Laser spot diameter [mm] | | 1 | | | | | | | |
| Scanning line interval [mm] | | 0.5 | 0.5 | 0.7 | 0.5 | 0.5 | 0.5 | 0.7 | 0.5 | 0.5 |
| Laser scanning speed [mm/sec] | | 23000 | 24000 | 18000 | 14000 | 20000 | 18000 | 16000 | 16000 | 11000 |
| Seal strength [N/15 mm] | | 3.0 | 4.0 | 5.4 | 6.9 | 6.9 | 7.1 | 7.7 | 8.4 | 8.5 |
| Thickness [μm] | Precursor portion | 1.2 | 3.2 | 4.9 | 7.2 | 4.2 | 5.8 | 5.9 | 8.0 | 10.4 |
| | Intermediate portion | 0.9 | 0.8 | 0.9 | 1.0 | 0.7 | 0.6 | 0.8 | 0.9 | 0.8 |
| Degree of birefringence | Precursor portion | 4.6E-04 | 2.1E-04 | 2.1E-04 | 4.4E-03 | 2.3E-03 | 2.8E-03 | 1.5E-04 | 1.2E-04 | 2.1E-04 |
| | Intermediate portion | 3.6E-02 | 4.1E-02 | 4.3E-02 | 3.3E-02 | 4.1E-02 | 3.7E-02 | 3.4E-02 | 3.6E-02 | 1.8E-02 |
| | Unmodified portion | 1.7E-01 | 1.2E-01 | 1.4E-01 | 8.2E-02 | 1.3E-01 | 9.9E-02 | 1.1E-01 | 9.4E-02 | 8.9E-02 |
| | Non-irradiated portion | 1.6E-01 | 1.3E-01 | 1.3E-01 | 7.8E-02 | 1.4E-01 | 1.2E-01 | 1.2E-01 | 1.1E-01 | 9.7E-02 |
| Change rate [%] of unmodified portion. | | 5.8 | 10.9 | 0.6 | 6.3 | 5.9 | 15.7 | 4.4 | 17.0 | 8.5 |

Table 3

| | | | |
|---|---|---|---|
| Output [W] | | 30 | |
| Laser spot diameter [mm] | | 1 | |
| Scanning line interval [mm] | | 0.7 | |
| Laser scanning speed | | 1528 | 1910 |
| Seal strength [N/15 mm] | | 10.2 | 0.3 |
| Precursor portion thickness [μm] | | 12.0 | 0.0 |
| Degree of birefringence of laser irradiated portion | | 1.1E-03 | 1.3E-01 |

The light absorptivity of the laser beam having a wavelength of 9.3 μm (light attenuation rate: 62%, attenuation coefficient: 0.035 μm$^{-1}$) used in the Example was higher than the light absorptivity of the laser beam having a wavelength of 10.6 μm (light attenuation rate: 19%, attenuation coefficient: 0.0076 μm$^{-1}$) used in the Comparative Example. As a result, in the Example, a heat seal precursor portion T1 ("precursor portion" in Table 2) having a thickness of from 1.23 μm to 10.40 μm is formed with respect to the biaxially stretched PET film 10 having a thickness of 12 μm. It is thought that this result is attributed to the fact that when a laser beam having high light absorptivity is used, absorption occurs strongly on the laser beam irradiation surface side, and thus absorption in the depth direction of the biaxially stretched PET film 10 becomes weaker than that on the surface side. In contrast, in the Comparative Example, the entire thickness is modified, and the heat seal precursor portion T1, the intermediate portion T2, and the unmodified portion T3 are not formed unlike the case of the Example.

The results of the Example suggest that the thickness of the heat seal precursor portion T1 can be adjusted by changing the laser scanning speed in addition to the light absorptivity of the laser beam. In general, when the laser scanning speed is low, the thickness of the heat seal precursor portion T1 increases, whereas when the laser scanning speed is high, the thickness of the heat seal precursor portion T1 decreases. Meanwhile, the thickness of the intermediate portion T2 is generally 2 μm or less regardless of the thickness of the heat seal precursor portion T1.

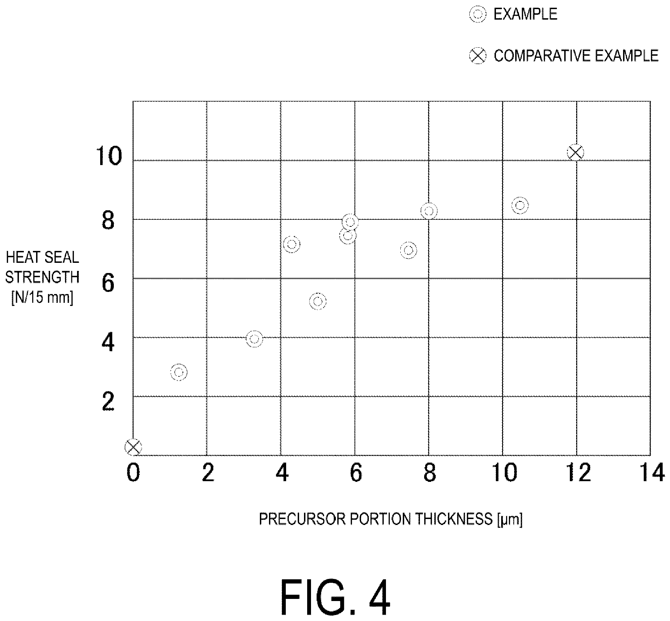

As is clear from the results of the Example, the heat seal strength can be controlled by the thickness of the heat seal precursor portion T1. FIG. 4 is a graph showing the results of the Example and Comparative Example with the thickness of the heat seal precursor portion on the horizontal axis and the heat seal strength on the vertical axis. In the Example, it can be said that the heat seal strength generally increases in accordance with the thickness of the heat seal precursor portion T1. In addition, the heat seal strength in the Example is lower than that in the Comparative Example, and the results demonstrate that the heat seal strength can be controlled so as to adapt to easy peelability.

As described above, when the heat seal region 1A is to be formed by using the stretched film 1 or the modification treatment method of the stretched film 1 according to the embodiment of the present invention, the stretched film 1 is irradiated with a laser beam having high light absorptivity and an attenuation coefficient of 0.02 μm$^{-1}$ or greater as described above, to thereby form the heat seal precursor portion T1, the intermediate portion T2, and the unmodified portion T3 in the stretched polyester film in this order from the side irradiated with the laser beam.

As a result, even when the heat seal region 1A is treated uniformly in a planar manner, the heat seal strength can be controlled by changing the thickness of the heat seal precursor portion T1, and a desired seal strength can be achieved by suppressing variations in the heat seal strength.

In particular, in order to adapt to easy peelability, the thickness of the heat seal precursor portion T1 is preferably adjusted to fall within a range from 1% to 60%, more preferably a range from 1% to 45%, and particularly preferably a range from 1% to 25% of the overall thickness of the stretched polyester film. When the thickness of the heat seal precursor portion T1 is less than 1% of the overall thickness, appropriate heat sealability cannot be imparted, whereas when the thickness of the heat seal precursor portion T1 is greater than 60% of the overall thickness, easy peelability cannot be realized. The graph of FIG. 4 also shows that the heat seal strength can be appropriately adjusted by setting the thickness of the heat seal precursor portion T1 to fall within a range from 1% to 60% of the overall thickness (setting the thickness of the heat seal precursor portion T1 to fall within a range from 0.12 to 7.2 μm when the overall thickness is 12 μm).

**Reference Signs List**

1: Stretched film, 1A: Heat seal region, 1B: Non-irradiated portion (untreated portion), T1: Heat seal precursor portion, T2: Intermediate portion, T3: Unmodified portion, 10: Biaxially stretched PET film, 11: Polyurethane adhesive, 12: Aluminum foil

**Claims**

1. A stretched film comprising a stretched polyester film having a heat seal region on a surface of the film, the heat seal region being irradiated with a laser beam having a wavelength in an infrared region, wherein

   the heat seal region has a heat seal precursor portion, an intermediate portion, and an unmodified portion formed in this order in a film thickness direction from the surface irradiated with the laser beam,
   the heat seal precursor portion has a degree of birefringence of $5 \times 10^{-3}$ or less,
   the intermediate portion has a thickness of 2 $\mu$m or less, and
   a change rate in a degree of birefringence of the unmodified portion is 20% or less relative to a degree of birefringence of a portion not irradiated with the laser beam.

2. The stretched film according to claim 1, wherein a thickness of the heat seal precursor portion is from 1% to 60% of an overall thickness of the film.

3. The stretched film according to claim 1, wherein the stretched polyester film is a stretched polyethylene terephthalate film.

4. The stretched film according to claim 1, wherein the stretched film is laminated with another film such that the heat seal precursor portion is exposed.

5. A method for treating a stretched film, the method comprising irradiating an entire surface or a portion of the surface of a stretched film with a laser beam having a wavelength in an infrared region to form a heat seal region, wherein the laser beam is a laser beam having an attenuation coefficient of 0.02 $\mu$m$^{-1}$ or greater.

FIG. 1

FIG. 2

1

10

11

12

11

10

# FIG. 3

FIG. 4

## INTERNATIONAL SEARCH REPORT

| International application No. |
|---|
| **PCT/JP2022/042093** |

### A. CLASSIFICATION OF SUBJECT MATTER

*C08J 7/00*(2006.01)i; *B23K 26/352*(2014.01)i; *B29C 65/16*(2006.01)i; *C08J 5/18*(2006.01)i
FI:    C08J7/00 302; C08J5/18 CFD; B29C65/16; B23K26/352

According to International Patent Classification (IPC) or to both national classification and IPC

### B. FIELDS SEARCHED

Minimum documentation searched (classification system followed by classification symbols)

C08J5/00-5/02; C08J5/12-5/22; C08J7/00-7/02; C08J7/12-7/18; B23K26/00-26/70; B29C65/00-65/82; B29C71/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-37219 A (TOYO SEIKAN GROUP HOLDINGS LTD) 12 March 2020 (2020-03-12) claims, paragraph [0055] | 1-5 |
| A | JP 2018-188593 A (TOPPAN PRINTING CO LTD) 29 November 2018 (2018-11-29) claims, paragraph [0012] | 1-5 |
| A | JP 2017-52103 A (TOPPAN PRINTING CO LTD) 16 March 2017 (2017-03-16) claims, paragraph [0027] | 1-5 |
| A | JP 2005-319501 A (KEYENCE CORP) 17 November 2005 (2005-11-17) claims, fig. 7-13 | 1-5 |

☐ Further documents are listed in the continuation of Box C.    ☑ See patent family annex.

| | | |
|---|---|---|
| *   Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
|---|---|
| **06 January 2023** | **17 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2022/042093** |

| Patent document cited in search report | | | Publication date (day/month/year) | Patent family member(s) | | | Publication date (day/month/year) |
| --- | --- | --- | --- | --- | --- | --- | --- |
| JP | 2020-37219 | A | 12 March 2020 | (Family: none) | | | |
| JP | 2018-188593 | A | 29 November 2018 | (Family: none) | | | |
| JP | 2017-52103 | A | 16 March 2017 | US<br>claims, paragraph [0063]<br>EP<br>TW<br>CN | 2018/0169978<br><br>3348382<br>201718154<br>108025506 | A1<br><br>A1<br>A<br>A | |
| JP | 2005-319501 | A | 17 November 2005 | (Family: none) | | | |

Form PCT/ISA/210 (patent family annex) (January 2015)

**EP 4 431 555 A1**

**REFERENCES CITED IN THE DESCRIPTION**

**Patent documents cited in the description**

- JP 2018058973 A